# EUROPÄISCHE PATENTANMELDUNG

(11) **EP 0 718 762 A1**
(43) Veröffentlichungstag der Anmeldung: **26.06.1996**
(21) Anmeldenummer: 95120520.2
(22) Anmeldetag: 23.12.1995
(51) Int. Cl.: G06F 9/46

(54) **Verfahren zur Aufgabenbearbeitung sowie Bearbeitungs-Modul, Programm-Modul und Mehrrechnersystem damit**

(30) Priorität: 24.12.1994 DE 4446510
(71) Anmelder: Alcatel SEL Aktiengesellschaft, D-70435 Stuttgart (DE)
(72) Erfinder: Willmann, Gert, D-70184 Stuttgart (DE)
(74) Vertreter: Brose, Gerhard

(57) **Zusammenfassung**

**Stand der Technik:** Modul wartet bei der Durchführung einer Aufgabe (TPB) auf eine Nachricht (MESS) von einem anderen Modul und führt sodann die Aufgabe (TPB) fort.

**Technisches Problem:** Verringerung der Bearbeitungszeit.

**Grundidee:** Modul führt während des Wartens auf die Nachricht (MESS) bereits Berechnungen (TPB (PMESS)) für mindestens eine mögliche Nachricht (PMESS) durch und übernimmt diese später, falls Übereinstimmungen zwischen diesen Nachrichten (MESS, PMESS) ermittelt werden.

**Lösung:** Anschluß-Modul führt beim Verbindungsaufbau bereits solche Berechnungen für die wahrscheinlichste Nachrichtenart durch, die unabhängig von deren konkreten Parametern sind.

**Vorteil:** einfach zu implementieren

## Beschreibung

Die Erfindung betrifft ein Verfahren zur Bearbeitung einer Aufgabe, nach dem Oberbegriff von Anspruch 1, ein Bearbeitungs-Modul zur Bearbeitung einer Aufgabe, nach dem Oberbegriff von Anspruch 6, ein Programm-Modul nach dem Oberbegriff von Anspruch 11, sowie ein Mehrrechnersystem nach dem Oberbegriff von Anspruch 12.

Komplexere Funktionen werden in zunehmendem Maße in Mehrrechnersystemen durchgeführt, in denen eine Vielzahl von miteinander kommunizierenden Rechner-Modulen jeweils Teil-Aufgaben einer übergeordneten Gesamt-Aufgabe ausführt.

Die Erfindung geht nun von solchen Mehrrechnersystemen aus.

In dem Artikel "Ortsvermittlungsstelle" aus der Zeitschrift "Elektrisches Nachrichtenwesen", Band 56, Nummer 2/3, 1981 wird auf den Seiten 228 bis 230 beispielsweise der Verbindungsaufbau durch eine Vermittlungsstelle beschrieben, die ein solches Mehrrechnersystem enthält. Der genaue Aufbau dieses Mehrrechnersystems kann hierbei den anderen Artikeln aus diesem Band, insbesondere dem Artikel "Hardware-Struktur", entnommen werden.

Die Vermittlungsstelle besteht aus mehreren über das Koppelnetz miteinander verbundenen Rechner-Modulen. Für die Durchführung des Verbindungsaufbaus arbeiten sechs dieser Rechner-Module zusammen und tauschen hierzu Nachrichten über das Koppelnetz aus, wobei jedes dieser Rechner-Module eine ganz bestimmte Aufgabe zu bearbeiten hat. Hierbei kommt es vor, daß ein Rechner-Modul die Durchführung seiner Aufgabe unterbricht, mittels einer Anforderungs-Nachricht Informationen von einem anderen Rechner-Modul anfordert und auf eine Antwort-Nachricht von diesem Rechner-Modul wartet, da es die Informationen zur weiteren Durchführung der Aufgabe benötigt. In einem solchen Fall wartet es, bis es die Antwort-Nachricht empfängt und führt erst nach Empfang der Antwort-Nachricht seine Aufgabe fort.

Bei der Verteilung des Verbindungsaufbaus auf mehrere Rechner-Module wird für den Nachrichtenaustausch zwischen den Rechnermodulen zusätzlich Zeit benötigt. Der Vorteil der möglichen parallelen Bearbeitung von Aufgaben durch mehrere Rechner-Module kommt so manchmal nicht voll zum Tragen, da Rechner-Module oft gegenseitig Informationen voneinander benötigen und so Wartezeiten anfallen. Die Verbindungsaufbauzeit kann sich so manchmal trotz höherem Geräte-Aufwand verlängern.

Der Erfindung liegt nun die Aufgabe zugrunde, die Aufgabenbearbeitung in einem kommunizierenden Modul zu beschleunigen.

Die Aufgabe wird gelöst durch ein Verfahren nach der Lehre von Anspruch 1, sowie durch ein Bearbeitungs-Modul, ein Programm-Modul und ein Mehrrechnersystem nach der Lehre von Anspruch 6, 11 bzw. 12.

Die Grundidee der Erfindung ist, die Wartezeit bis zum Empfang einer Nachricht, die für das Fortführen der Aufgabe notwendige Informationen enthält, damit auszunutzen, bereits Berechnungen für den Inhalt einer möglichen Nachricht auszuführen und diese

Berechnungen für die weitere Durchführung der Aufgabe zu übernehmen, wenn der Inhalt der möglichen Nachricht mit dem der empfangenen zumindest in Teilen übereinstimmt. So wird in dem Fall, in dem die richtige mögliche Nachricht gewählt worden ist, die Wartezeit voll für die Bearbeitung der Aufgabe genutzt. Im anderen Fall können die Berechnungen nicht komplett weiter verwendet werden und die Wartezeit wird wie bisher nicht für die Bearbeitung der Aufgabe genutzt. Je nach Wahl der möglichen Nachricht und der Länge der Wartezeit ergibt sich so eine erhebliche Beschleunigung der Bearbeitungszeit der Aufgabe.

Vorteilhafte Ausgestaltungen der Erfindung sind den Unteransprüchen zu entnehmen.

Ein weiterer Vorteil der Erfindung ist, daß ein Bearbeitungs-Modul, das die Aufgabe bearbeitet, weniger oft in einem unproduktiven Warte-Zustand ist und es so besser ausgenutzt wird. Damit wird es in vielen Fällen möglich, Bearbeitungs-Module mit einer geringeren Leistung oder weniger Bearbeitungs-Module einzusetzen.

Noch ein Vorteil ist die leichte Implementierbarkeit der Erfindung. Es ist unter Umständen nur eine Anderung der ein Bearbeitungs-Modul steuernden Software notwendig.

Im folgenden wird die Erfindung anhand eines Ausführungsbeispiels unter Zuhilfenahme bei liegender Zeichnungen näher erläutert.
- Fig. 1: zeigt ein Blockschaltbild eines erfindungsgemäßen Mehrrechnersystems mit mehreren erfindungsgemäßen Bearbeitungs-Modulen.
- Fig. 2: zeigt ein detailierteres Blockschaltbild eines erfindungsgemäßen Bearbeitungs-Moduls nach Fig. 1.
- Fig. 3: zeigt ein Ablaufdiagramm eines erfindungsgemäßen Verfahrens für das erfindungsgemäße Bearbeitungs-Modul nach Fig. 2.

Im Ausführungsbeispiel wird die Durchführung des erfindungsgemäßen Verfahrens zur Aufgabenbearbeitung in einem erfindungsgemäßen Bearbeitungs-Modul beschrieben, das von einem erfindungsgemäßen Programm-Modul gesteuert wird und Teil eines erfindungsgemäßen Mehrrechnersystems ist.

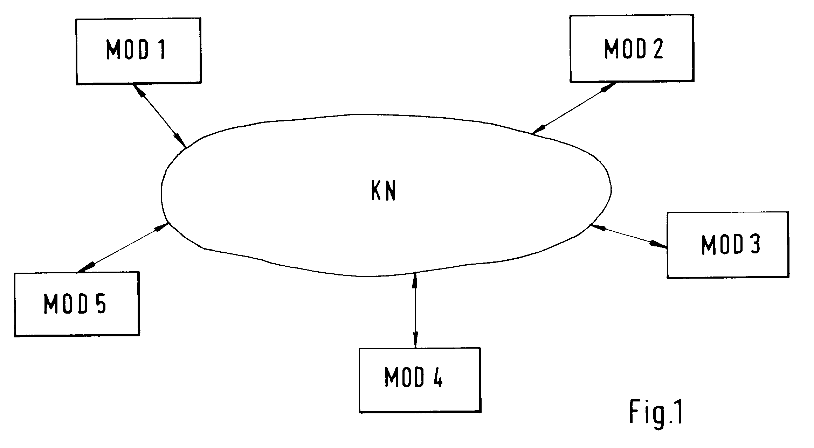

Fig. 1 zeigt ein Mehrrechnersystem mit 5 Modulen MOD1 bis MOD5 und einem Kommunikationsnetz KN. Die Module MOD1 bis MOD5 sind über das Kommunikationsnetz KN miteinander verbunden.

Bei diesem Mehrrechnersystem handelt es sich beispielsweise um einen Teil einer Vermittlungsstelle in dem mehrere, zusammenarbeitende Rechner Vermittlungs-Aufgaben bearbeiten. Es ist auch möglich, daß es sich hierbei um ein andersartiges Mehrrechnersystem handelt, das beispielsweise komplexe Berechnungen oder Datenbank-Anwendungen durchführt.

Die Module M1 bis M5 sind Bearbeitungs-Module, die jeweils bestimmte Aufgaben ausführen. Sie sind ähnlich aufgebaut und bestehen jeweils aus einem Rechner mit entsprechenden peripheren Komponenten, die unter anderem den Datenaustausch mit den anderen Modulen über das Kommunikationsnetz KN ermöglichen. Die Rechner werden hierbei jeweils von einem oder mehreren Programm-Modulen gesteuert, die in einer Programmiersprache geschrieben sind. Der genaue Aufbau der Module M1 bis M5 kann beispielhaft dem Artikel "Hardware-Struktur", Seite 135 - 147 der Zeitschrift Elektrisches Nachrichtenwesen, Band 58, Nr. 2/3, 1981 oder anderen Artikeln aus diesem Band entnommen werden.

Es ist auch möglich, daß die Module M1 bis M5 unterschiedlich aufgebaut sind. Beispielsweise könnte nur ein einziges oder nur einige der Module Bearbeitungs-Module sein und Aufgaben bearbeiten. Bei den restlichen Modulen könnte es sich beispielsweise um Module für den Empfang oder die Ein- und Ausgabe von Daten handeln.

Bei dem Kommunikationsnetz KN handelt es sich um das Koppelnetz, das in der Vermittlungsstelle auch für die Verbindungen zwischen Teilnehmern genutzt wird. Es ist jedoch auch möglich, daß ein eigenständiges Kommunikationsnetz für den Austausch von Nachrichten zwischen den Modulen M1 bis M5 verwendet wird. Es können so beliebige Kommunkationsnetze mit verteiltem Vermittlungsverfahren verwendet werden, beispielsweise Token- oder Ethernet-Netze, oder mit zentralen Vermittlungsverfahren verwendet werden, beispielsweise ATM-Netze (ATM = Asynchronous Transfer Mode). Der Datenaustausch zwischen den Modulen M1 bis M5 kann hierbei auch auf höheren Protokoll-Ebenen erfolgen, und die räumliche Entfernung zwischen den Modulen M1 bis M5 kann sehr groß sein.

Die Zahl von 5 Modulen ist beispielhaft gewählt. Weiter ist es möglich, das es sich bei den Modulen M1 bis M5 nicht um Rechner handelt, sondern um Prozessoren in einem Mehrprozessorsystem. Das Kommunikationsnetz KN würde in diesem Fall von einem internen Bus dieses Mehrprozessorsystems gebildet. Darüberhinaus ist es möglich, daß die Module M1 bis M5 von virtuellen Prozessen gebildet werden, die auf einem Rechner oder einem Verbund von mehreren Rechnern ablaufen. Das Kommunikationsnetz KN würde dann allgemein von einem Kommunikationssystem gebildet, das für die Interprozeßkommunikation geeignet ist, beispielsweise von einem Mailbox-System. Dieses und weitere geeignete Kommunikationssysteme sind beispielsweise in dem Buch "Betriebssysteme: Eine Einführung" aus der Reihe "Handbuch der Informatik" von H.-J. Siegert, R. Oldenbourg-Verlag, 1991, Seite 91 - 96 erläutert.

Bei der Durchführung von Vermittlungs-Aufgaben arbeiten die Module MOD1 bis MOD5 zusammen, indem sie sich gegenseitig Informationen zusenden, sich gegenseitig auffordern, Informationen zu senden, und sich gegenseitig Aufträge erteilen. Hierbei ist es einem der Module M1 bis M5 des öfteren nicht mehr möglich, eine Aufgabe weiter durchzuführen, da es für die weitere Durchführung der Aufgabe notwendige Informationen noch nicht erhalten hat. Tritt dieser Fall ein, so beginnt das entsprechende Modul bereits vor dem Empfang der erwarteten Nachricht Berechnungen für den wahrscheinlichsten Inhalt der erwarteten Nachricht durchzuführen, d.h. für deren wahrscheinlichsten Nachrichten-Inhalt. Nachdem die Nachricht empfangen worden ist, vergleicht das Modul den wahrscheinlichsten Nachrichten-Inhalt mit dem empfangenen Nachrichten-Inhalt und übernimmt bei Übereinstimmung dieser beiden Nachrichten-Inhalte die Berechnungen für die Durchführung der Aufgabe.

Der genaue Aufbau der Module MOD1 bis MOD5 wird nun anhand des Moduls MOD2 beispielhaft erläutert.

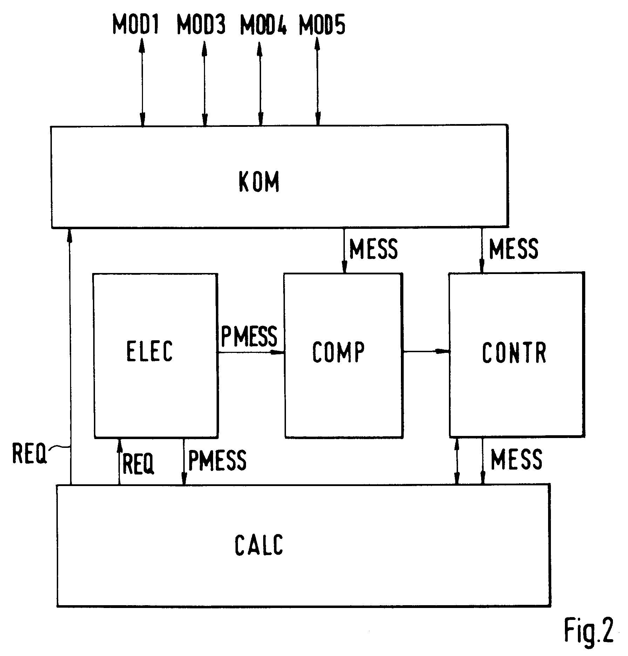

Fig. 2 zeigt das Modul MOD2. Das Modul MOD2 weist eine Kommunikationseinrichtung KOM, eine Steuereinrichtung CONTR, eine Vergleichs-Einrichtung COMP, eine Wahl-Einrichtung ELEC und eine Bearbeitungseinrichtung CALC auf.

Die Kommunikationseinrichtung KOM tauscht mit den restlichen der Module MOD1 bis MOD5 Daten aus, empfängt Daten von der Bearbeitungseinrichtung CALC und sendet Daten an die Vergleichs-Einrichtung COMP und an die Steuereinrichtung CONTR. Die Wahl-Einrichtung ELEC tauscht mit der Bearbeitungseinrichtung CALC Daten aus und sendet an die Kommunikationseinrichtung KOM Daten. Die Steuereinrichtung CONTR empfängt Daten von der Vergleichs-Einrichtung COMP und tauscht Steuerdaten mit der Bearbeitungseinrichtung CALC aus.

Die Kommunikationseinrichtung KOM stellt die für den Austausch von Nachrichten über das Kommunikationsnetz KN erforderlichen Kommunikationsdienste und den dafür notwendigen Netzanschluß an das Kommunkationsnetz KN zur Verfügung.

Die Bearbeitungseinrichtung CALC bearbeitet Aufgaben. Die Abarbeitung der Aufgaben wird hierbei von der Steuereinrichtung CONTR gesteuert. Wenn die Bearbeitungseinrichtung CALC für die weitere Bearbeitung einer Aufgabe Informationen von einem anderen der Module MOD1 bis MOD5 benötigt, so sendet sie eine Anforderungs-Nachricht REQ an die Wahl-Einrichtung ELEC und an die Kommunikationseinrichtung KOM, die die Anforderungs-Nachricht REQ über das Kommunikationsnetz KN an das entsprechende Modul weiterleitet. Die Anforderungs-Nachricht REQ enthält hierbei die Anforderung an das entsprechende Modul, die benötigten Informationen an das Modul MOD2 zu senden. Als Antwort darauf sendet dieses Modul sodann eine Antwort-Nachricht MESS an das Modul M2, deren Nachrichten-Inhalt die entsprechenden Informationen enthält.

Die Wahl-Einrichtung ELEC bestimmt den wahrscheinlichsten, möglichen Nachrichten-Inhalt der Antwort-Nachricht MESS. Hierfür enthält sie eine Speichereinrichtung, in der für jede mögliche Anforderungs-Nachricht von der Bearbeitungseinrichtung CALC der wahrscheinlichste Nachrichten-Inhalt der Antwort-Nachricht abgespeichert ist. Aus dieser Speichereinrichtung liest sie den der Anforderungs-Nachricht REQ zugeordneten, wahrscheinlichsten Nachrichten-Inhalt PMESS aus und sendet diesen an die Bearbeitungseinrichtung CALC. Die Zuordnung der Nachrichten-Inhalte zu den Anforderungs-Nachrichten wird hierbei bei der Inbetriebnahme des Moduls MOD2 festgelegt, beispielsweise indem sie von einem Speichermedium eingelesen oder mit einer Eingabeeinrichtung eingegeben wird.

Es ist vorteilhaft, diese Zuordnung während des Betriebs des Moduls MOD2 adaptiv zu verändern. Hierfür wird von der Wahl-Einrichtung ELEC ständig erfaßt, welche Nachrichten-Inhalte die Antwort-Nachrichten haben, die auf Anforderungs-Nachrichten von dem Modul MOD1 gesendet werden. Mittels dieser Daten wird dann ständig neu bestimmt, welcher Nachrichten-Inhalt zur Zeit am wahrscheinlichsten für welche Anforderungs-Nachricht ist oder ob sich eine Vorausberechnung überhaupt lohnt.

Es ist auch möglich, daß diese Zuordnung nach anderen Kriterien erfolgt. Beispielsweise kann der Anforderungs-Nachricht REQ derjenige Nachrichten-Inhalt zugeordnet werden, für den die Bearbeitungseinrichtung CALC bei der Durchführung der Aufgabe am meisten Bearbeitungszeit benötigt. Es ist weiter möglich, daß für die Zuordnung sowohl das Kriterium der Wahrscheinlichkeit als auch das der Dauer der Bearbeitungszeit herangezogen wird. Hierfür würden in der Wahl-Einrichtung ELEC Zuordnungen abgespeichert, die diesen beiden Kriterien entsprechen. Es ist auch möglich, daß erste Zuordnungen, die die Wahrscheinlichkeit von Nachrichten-Inhalten zu Anforderungs-Nachrichten, und zweite Zuordnungen, die die Dauer der Bearbeitungszeiten von Nachrichten-Inhalten betreffen, abgespeichert sind und daß die Nachrichten-Inhalte aus diesen Zuordnungen erst berechnet werden.

Die Vergleichs-Einrichtung COMP empfängt von der Wahl-Einrichtung ELEC den Nachrichten-Inhalt PMESS und speichert diesen solange ab, bis sie von der Kommunikationseinrichtung KOM die Antwort-Nachricht MESS empfängt. Nach deren Empfang vergleicht sie deren Nachrichten-Inhalt mit dem Nachrichten-Inhalt PMESS. Das Ergebnis des Vergleichs sendet sie sodann an die Steuereinrichtung CONTR.

Die Steuereinrichtung CONTR steuert den Ablauf der Aufgabenbearbeitung in der Bearbeitungseinrichtung CALC und deren Koordination mit den übrigen Einrichtungen des Moduls MOD2.

Wenn die Bearbeitungseinrichtung CALC die Anforderungs-Nachricht REQ an die Wahl-Einrichtung ELEC sendet, so sendet sie gleichzeitig einen entsprechenden Steuerbefehl an die Steuereinrichtung CONTR. Die Steuereinrichtung CONTR veranlaßt daraufhin die Bearbeitungseinrichtung CALC, den augenblicklichen Zustand der Aufgabenbearbeitung abzuspeichern und bis zum Empfang des Nachrichten-Inhaltes MESS in einen Warte-Zustand zu gehen. Empfängt die Steuereinrichtung CONTR von der Vergleichs-Einrichtung COMP die Nachricht, daß der Nachrichten-Inhalt der Antwort-Nachricht MESS mit dem Nachrichten-Inhalt PMESS nicht übereinstimmt, so stoppt sie die weitere Aufgabenbearbeitung durch die Bearbeitungseinrichtung CALC und versetzt den Zustand die Aufgabenbearbeitung in den abgespeicherten Zustand. Sodann gibt sie die Antwort-Nachricht MESS an die Bearbeitungseinrichtung CALC weiter und startet die Aufgabenbearbeitung für den Nachrichten-Inhalt der Antwort-Nachricht MESS. Wird der Steuereinrichtung CONTR gemeldet, daß der Nachrichten-Inhalt der Antwort-Nachricht MESS mit dem Nachrichten-Inhalt PMESS übereinstimmt, so unterbricht sie die Aufgabenbearbeitung in der Bearbeitungseinrichtung CALC nicht. Es ist hier auch möglich, daß sie dann das Löschen des abgespeicherten Bearbeitungs-Zustandes veranlaßt.

Wenn der Fall eintritt, daß die Bearbeitung der Aufgabe für den Nachrichten-Inhalt PMESS bereits vor dem Eintreffen der Antwort-Nachricht MESS abgeschlossen ist, so wird die Bearbeitungseinrichtung CALC in einen Wartezustand versetzt.

Es ist auch möglich, daß die Wahl-Einrichtung ELEC der Anforderungs-Nachricht REQ mehrere Nachrichten-Inhalte zuordnet. Diese Nachrichten-Inhalte entsprechen den oben dargelegten Kriterien, beispielsweise die n wahrscheinlichsten Nachrichten-Inhalte. Diese Nachrichten-Inhalte würden dann nacheinander auf einen Steuerbefehl von der Steuereinrichtung CONTR an die Bearbeitungseinrichtung CALC gesendet, die dann nacheinander jeweils die Berechnungen für diese Nachrichten-Inhalte durchführen und deren Ergebnis abspeichern würde. Diese Vorgehensweise wäre vor allem dann von Vorteil, wenn die Zeit bis zum Eintreffen der Antwort-Nachricht MESS von dem Modul MOD1 groß ist und die Bearbeitungseinrichtungen ansonsten unbeschäftigt wären.

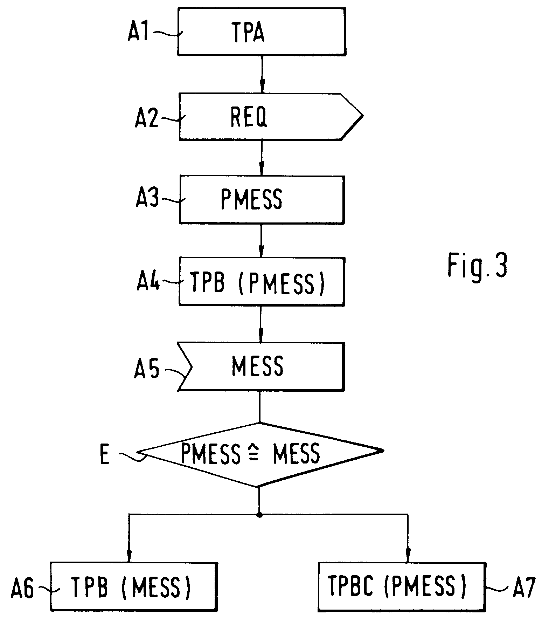

Im folgenden wird nun die Durchführung des erfindungsgemäßen Verfahrens in dem Modul MOD2 anhand des Ablaufdiagramms nach Fig. 3 erläutert.

Fig. 3 zeigt sieben Schritte A1 bis A7 und einen Entscheidungsschritt E. Auf die fünf Schritte A1 bis A5 folgt der Entscheidungsschritt E. Dort wird zum Schritt A6 oder A7 verzweigt.

In der Bearbeitungseinrichtung CALC wird eine Aufgabe T ausgeführt. Im ersten Schritt A1 wird ein erster Teil TPA der Aufgabe T durchgeführt. Im zweiten Schritt A2 sendet die Bearbeitungseinrichtung CALC die Anforderungs-Nachricht REQ an die Wahl-Einrichtung ELEC, da sie für die Durchführung eines zweiten Teils TPB der Aufgabe T Informationen von dem Modul MOD1 benötigt. Im dritten Schritt A3 bestimmt die Wahl-Einrichtung ELEC den Nachrichten-Inhalt PMESS und sendet diesen an die Bearbeitungseinrichtung CALC. Im vierten Schritt A4 speichert die Bearbeitungseinrichtung CALC den Zustand der Aufgabenbearbeitung ab und führt die Aufgabenbearbeitung des Teils TPB für den Nachrichten-Inhalt PMESS weiter. Im fünften Schritt A5 empfängt die Vergleichs-Einrichtung COMP die Antwort-Nachricht MESS.

Im Entscheidungs-Schritt E vergleicht die Vergleich-Einrichtung COMP den Nachrichten-Inhalt der Antwort-Nachricht MESS mit dem Nachrichten-Inhalt PMESS und meldet das Ergebnis an die Steuereinrichtung CONTR. Stimmen sie nicht überein, so versetzt die Steuereinrichtung CONTR im sechsten Schritt A6 die Bearbeitungs-Einrichtung CALC in den abgespeicherten Zustand zurück und startet die Bearbeitung des Teils TPB nun für die Antwort-Nachricht MESS von neuem. Stimmen sie überein, so wird im siebten Schritt A7 die Bearbeitung des restlichen Teils TPBC des Teils TPB mit dem Nachrichten-Inhalt PMESS in der Bearbeitungs-Einrichtung CALC fortgesetzt.

Es ist auch möglich, daß auf die Anforderungs-Nachricht REQ eine sehr große Zahl verschiedener Nachrichten-Inhalte der Antwort-Nachricht MESS möglich sind. Dies wäre beispielsweise der Fall, wenn die Nachrichten-Inhalte jeweils aus einem Steuer-Teil und einem Parameter-Teil bestehen. Der Steuer-Teil würde hierbei die Art der Nachricht und der Parameterteil mehrere, unterschiedliche Parameter angeben. Bei derartigen Nachrichten-Inhalten ist die Wahrscheinlichkeit sehr gering, daß auf eine Anforderungs-Nachricht Nachrichten-Inhalte mit gleichem Steuer- und gleichem Parameter-Teil empfangen werden. Meist ist keine Aussage über den zu erwartenden Parameter-Teil möglich. Bei solchen Nachrichten-Inhalten wäre es nun vorteilhaft, in der Wahl-Einrichtung ELEC einer Anforderungs-Nachricht nur den wahrscheinlichsten Steuer-Teil zuzuordnen und diesen an die Bearbeitungseinrichtung CALC zu senden. Diese würde dann die Bearbeitung der Aufgabe nur soweit fortführen, wie es ihr mit der Kenntnis dieses Steuer-Teils möglich ist. Sodann würde sie bis zum Empfang der Antwort-Nachricht MESS in einen Wartezustand versetzt. Wenn die Vergleichs-Einrichtung COMP sodann feststellt, daß der zugeordnete Steuer-Teil mit dem Steuer-Teil der Antwort-Nachricht MESS übereinstimmt, so würde die Bearbeitungs-Einrichtung CALC die Bearbeitung der Aufgabe mit dem Parameter-Teil der Antwort-Nachricht MESS fortführen.

Es ist hierbei auch möglich, daß nicht nach Steuer- und Parameter-Teil unterschieden wird. Es ist ganz allgemein hier möglich, Gruppen ähnlicher möglicher Nachrichten-Inhalte festzulegen und zu bestimmen, welche Teile der Aufgabe jeweils für die Nachrichten-Inhalte einer solchen Gruppe gleich durchzuführen sind. Es ist hierbei vorteilhaft, die Gruppen so zu wählen, daß der Teil der Aufgabe möglichst groß wird, der für die Antwort-Nachrichten dieser Gruppe gemeinsam durchführbar ist.

## Patentansprüche

1. Verfahren zur Bearbeitung einer Aufgabe durch ein Bearbeitungs-Modul (MOD1 bis MOD5), das für die Durchführung der Aufgabe über ein Kommunikationssystem (KN) mit mindestens einem anderen Modul (MOD1 bis MOD5) kommuniziert, wobei für die Durchführung der Aufgabe Informationen benötigt werden, die im Nachrichten-Inhalt mindestens einer über das Kommunikationssystem zu empfangenden Nachricht (MESS) enthalten sind,
**dadurch gekennzeichnet,** daß bereits vor dem Empfang der Nachricht (MESS) Berechnungen für mindestens einen möglichen Nachrichten-Inhalt (PMESS) durchgeführt werden, daß nach dem Empfang der Nachricht (MESS) deren Nachrichten-Inhalt mit dem möglichen Nachrichten-Inhalt (PMESS) verglichen wird und daß die Berechnungen für die Durchführung der Aufgabe übernommen werden, wenn Übereinstimmungen zwischen diesen beiden Nachrichten-Inhalten ermittelt werden.

2. Verfahren nach Anspruch 1, dadurch gekennzeichnet, daß bereits vor dem Empfang der Nachricht (MESS) Berechnungen für den wahrscheinlichsten, möglichen Nachrichten-Inhalt (PMESS) durchgeführt werden.

3. Verfahren nach Anspruch 1, dadurch gekennzeichnet, daß bereits vor dem Empfang der Nachricht (MESS) Berechnungen für denjenigen möglichen Nachrichten-Inhalt (PMESS) durchgeführt werden, der den größten Berechnungsaufwand verursacht.

4. Verfahren nach Anspruch 1, dadurch gekennzeichnet, daß bereits vor dem Empfang der Nachricht (MESS) für eine Gruppe ähnlicher, möglicher Nachrichten-Inhalte solche Berechnungen durchgeführt werden, die für alle Nachrichten-Inhalte dieser Gruppe gleich sind, und daß diese Berechnungen für die Durchführung der Aufgabe übernommen werden, wenn der Nachrichten-Inhalt der empfangenen Nachricht (MESS) dieser Gruppe entspricht.

5. Verfahren nach Anspruch 4, dadurch gekennzeichnet, daß die Nachrichten-Inhalte von einem Steuer-Teil und einem Parameter-Teil gebildet werden und daß eine Gruppe ähnlicher Nachrichten-Inhalte durch gleiche Steuer-Teile bestimmt wird.

6. Bearbeitungs-Modul (MOD1 bis MOD5) zur Bearbeitung einer Aufgabe, mit einer Kommunikationseinrichtung (KOM) zur Kommunikation mit mindestens einem anderen Modul (MOD1 bis MOD5) über ein Kommunikationssystem (KN) und mit einer Bearbeitungseinrichtung (CALC) zur Durchführung der Aufgabe, wobei für die Durchführung der Aufgabe Informationen notwendig sind, die im Nachrichten-Inhalt mindestens einer von der Kommunikationseinrichtung (KOM) zu empfangenden Nachricht (MESS) enthalten sind, **dadurch gekennzeichnet,** daß das Bearbeitungs-Modul (MOD1 bis MOD5) mit einer Wahl-Einrichtung (ELEC) zur Bestimmung mindestens eines möglichen Nachrichten-Inhaltes (PMESS), mit einer Vergleichs-Einrichtung (COMP) zum Vergleichen des Nachrichten-Inhalts einer empfangenen Nachricht (MESS) mit dem bestimmten, möglichen Nachrichten-Inhalt (PMESS) und mit einer Steuereinrichtung (CONTR) versehen ist, die so ausgestaltet ist, daß sie die Bearbeitungseinrichtung (CALC) bereits vor Empfang der Nachricht (MESS) dazu veranlaßt, Berechnungen für den bestimmten, möglichen Nachrichten-Inhalt (PMESS) durchzuführen und, wenn die Vergleichs-Einrichtung (COMP) nach dem Empfang der Nachricht (MESS) Übereinstimmungen zwischen diesen beiden Nachrichten-Inhalten ermittelt hat, die Bearbeitungseinrichtung (CALC) dazu veranlaßt, diese Berechnungen für die Durchführung der Aufgabe zu übernehmen.

7. Bearbeitungs-Modul (MOD1 bis MOD5) nach Anspruch 6, dadurch gekennzeichnet, daß das Bearbeitungs-Modul (MOD1 bis MOD5) ein Rechner ist.

8. Bearbeitungs-Modul nach Anspruch 6, dadurch gekennzeichnet daß das Bearbeitungs-Modul ein virtueller Prozess ist, der von einem Rechner bearbeitet wird.

9. Bearbeitungs-Modul (MOD1 bis MOD5) nach Anspruch 6, dadurch gekennzeichnet, daß das Kommunikationssystem (KN) ein Kommunikationsnetz ist, das das Bearbeitungs-Modul (MOD1 bis MOD5) mit anderen Modulen (MOD1 bis MOD5) verbindet.

10. Bearbeitungs-Modul nach Anspruch 6, dadurch gekennzeichnet, daß das Kommunikationssystem ein Mailbox-System ist.

11. Programm-Modul zur Bearbeitung einer Aufgabe in einem Bearbeitungs-Modul (MOD1 bis MOD5), das für die Durchführung der Aufgabe über ein Kommunikationssystem (KN) mit mindestens einem anderen Modul (MOD1 bis MOD5) kommuniziert, wobei für die Durchführung der Aufgabe Informationen notwendig sind, die im Nachrichten-Inhalt mindestens einer über das Kommunikationssystem (KN) zu empfangenden Nachricht (MESS) enthalten sind, und das Programm-Modul einen Satz von Steuerbefehlen enthält, **dadurch gekennzeichnet,** daß der Satz von Steuerbefehlen bei seiner Ausführung in dem Bearbeitungs-Modul (MOD1 bis MOD5) dieses derart steuert, daß bereits vor dem Empfang der Nachricht (MESS) Berechnungen für mindestens einen möglichen Nachrichten-Inhalt (PMESS) durchgeführt werden, daß nach dem Empfang der Nachricht (MESS) deren Nachrichten-Inhalt mit dem möglichen Nachrichten-Inhalt (PMESS) verglichen wird und daß die Berechnungen für die Durchführung der Aufgabe übernommen werden, wenn Übereinstimmungen zwischen diesen beiden Nachrichten-Inhalten ermittelt werden.

12. Mehrrechnersystem mit einem Kommunikationssystem (KN) und mit mehreren über dieses verbundenen Modulen (MOD1 bis MOD5), von denen mindestens eines ein Bearbeitungs-Modul (MOD1 bis MOD5) ist, das mit einer Kommunikationseinrichtung (KOM) zur Kommunikation mit mindestens einem der anderen Module (MOD1 bis MOD5) und mit einer Bearbeitungseinrichtung (CALC) zur Durchführung einer Aufgabe versehen ist, wobei für die Durchführung der Aufgabe Informationen notwendig sind, die im Nachrichten-Inhalt mindestens einer von der Kommunikationseinrichtung zu empfangenden Nachricht (MESS) enthalten sind, **dadurch gekennzeichnet,** daß das Bearbeitungs-Modul (MOD1 bis MOD5) mit einer Wahl-Einrichtung (ELEC) zur Bestimmung mindestens eines möglichen Nachrichten-Inhaltes (PMESS), mit einer Vergleichs-Einrichtung (COMP) zum Vergleichen des Nachrichten-Inhalts der empfangenen Nachricht (MESS) mit dem bestimmten, möglichen Nachrichten-Inhalt (PMESS) und mit einer Steuereinrichtung (CONTR) versehen ist, die so ausgestaltet ist, daß sie die Bearbeitungseinrichtung (CALC) bereits vor Empfang der Nachricht (MESS) dazu veranlaßt, Berechnungen für den bestimmten, möglichen Nachrichten-Inhalt (PMESS) durchzuführen und, wenn die Vergleichs-Einrichtung (COMP) nach dem Empfang der Nachricht (MESS) Übereinstimmungen zwischen diesen beiden Nachrichten-Inhalten ermittelt hat, die Bearbeitungseinrichtung (CALC) dazu veranlaßt, diese Berechnungen für die Durchführung der Aufgabe zu übernehmen.

13. Mehrrechnersystem nach Anspruch 12, dadurch gekennzeichnet daß das Mehrrechnersystem eine Vermittlungsstelle ist.
